# EUROPÄISCHE PATENTSCHRIFT

(11) **EP 1 710 549 B1**
(45) Veröffentlichungstag und Bekanntmachung des Hinweises auf die Patenterteilung: **30.11.2011**
(21) Anmeldenummer: 06005423.6
(22) Anmeldetag: 16.03.2006
(51) Int. Cl.: G01L 5/28

(54) **Verfahren zum Prüfen der Bremse eines Motors eines Roboters**
Method for checking the brake of a robot motor
Procédé destiné à la vérification du frein d'un moteur de robot

(30) Priorität: 05.04.2005 DE 102005015608
(43) Veröffentlichungstag der Anmeldung: 11.10.2006
(73) Patentinhaber: YASKAWA Europe GmbH, 85391 Allershausen (DE)
(72) Erfinder: Klie, Helmut Dr., 85777 Jarzt (DE); Niedermeier, Josef, 82290 Haimhausen (DE)
(74) Vertreter: Zinnecker, Armin

(56) Entgegenhaltungen:
- EP-A- 1 215 475
- GB-A- 839 794
- US-B1- 6 651 494

## Beschreibung

Die Erfindung betrifft ein Verfahren zum Prüfen der Bremse eines Motors eines Roboters.

Aus der EP 1 215 475 A2 ist ein Verfahren zum Überprüfen der Bremse eines Elektromotors bekannt, bei dem die Bremse in einer Meßsequenz im drehzahlgeregelten Betrieb für kurze Zeit zum Einfallen gebracht wird. Mindestens während dieser Zeit wird ein Motorstrom gemessen. Aufgrund der so gewonnenen Meßdaten wird das Bremsmoment der Bremse bestimmt. Das Bremsmoment kann aufgrund der Motorströme bei gelöster und bei eingefallener Bremse bestimmt werden.

Die US-B1- 6 651 494 betrifft ein Verfahren zum Prüfen der Bremse eines Motors, worin der Motor bei eingefallener Bremse mit einem definierten Drehmoment angesteuert wird. Mit Hilfe eines Sensors wird die Position des Motors, insbesondere der Winkel der Motorwelle, erfaßt und mit dessen Anfangsposition verglichen.

Die GB 839 794 A betrifft ein Verfahren zur Messung des Winkels, um den sich ein Getriebe bei Einleitung eines bestimmten Drehmomentes dreht. Hierfür wird ein bestimmtes Drehmoment in einer bestimmten Richtung in ein blockiertes Getriebe eingeleitet. Anschließend wird die Drehrichtung bei weiterhin blockiertem Getriebe umgedreht und dasselbe Drehmoment wird in umgekehrter Richtung in das Getriebe eingeleitet. Der gemessene Gesamtwinkel zeigt die Getriebegenauigkeit an.

Aufgabe der Erfindung ist es, ein verbessertes Verfahren der eingangs angegebenen Art vorzuschlagen.

Erfindungsgemäß wird diese Aufgabe durch die kennzeichnenden Merkmale des Anspruchs 1 gelöst. Der Motor wird bei eingefallener Bremse mit einem definierten Drehmoment angesteuert. Die Position des Motors wird mit dessen Anfangsposition verglichen. Hierdurch kann festgestellt werden, ob die Bremse das angesteuerte Drehmoment abbremst. Dies ist der Fall, wenn sich die Position des Motors nicht geändert hat. Anderenfalls hat die Bremswirkung der Bremse so weit nachgelassen, daß sie das angesteuerte Drehmoment nicht mehr abbremsen kann.

Das Verfahren wird mit einem höheren Drehmoment erneut durchgeführt. Hierdurch kann das größte noch abgebremste Drehmoment ermittelt werden. Insbesondere ist es möglich, das Verfahren wiederholt mit einem jeweils höheren Drehmoment erneut durchzuführen. Dies kann so lange geschehen, bis sich die Position des Motors ändert, bis also das "Rutschmoment" erreicht ist. Das vorhergehende Drehmoment war dann das höchste noch gebremste Drehmoment.

Vorteilhafte Weiterbildungen sind in den Unteransprüchen beschrieben.

Das oder die Drehmomente können gespeichert werden. Mit oder ohne Speicherung können die Drehmomente weiterverarbeitet werden. Es ist insbesondere möglich, das maximale noch gebremste Drehmoment zu speichern.

Nach einer weiteren vorteilhaften Weiterbildung wird das Verfahren mit entgegengesetzter Motor-Drehrichtung erneut durchgeführt. Hierdurch kann die Bremse in beiden Motor-Drehrichtungen überprüft werden.

Eine weitere vorteilhafte Weiterbildung ist dadurch gekennzeichnet, daß das Verfahren für einen oder mehrere weitere Motoren des Roboters und/eines weiteren Roboters durchgeführt wird. Es kann insbesondere für alle Motoren der Roboter einer oder mehrerer Roboter-Anlagen durchgeführt werden.

Nach einer weiteren vorteilhaften Weiterbildung wird das Verfahren nach einer bestimmten Zeit erneut durchgeführt. Die ermittelten Werte, die vorzugsweise gespeichert werden, werden mit früher gespeicherten Werten verglichen. Auf diese Weise kann der zeitliche Verlauf der Bremsleistung der Bremse ermittelt werden. Hierdurch kann eine Prognose für die zukünftig zu erwartende Bremsleistung erstellt werden.

Ein Ausführungsbeispiel der Erfindung wird nachstehend anhand der beigefügten Zeichnung im einzelnen erläutert. In der Zeichnung zeigt
- Fig. 1: einen für einen Roboter bestimmten Motor mit einer Bremse,
- Fig. 2: den zeitlichen Verlauf der Bremsspannung, der Motorposition und des Drehmoments und
- Fig. 3: einen Programm-Ablaufplan.

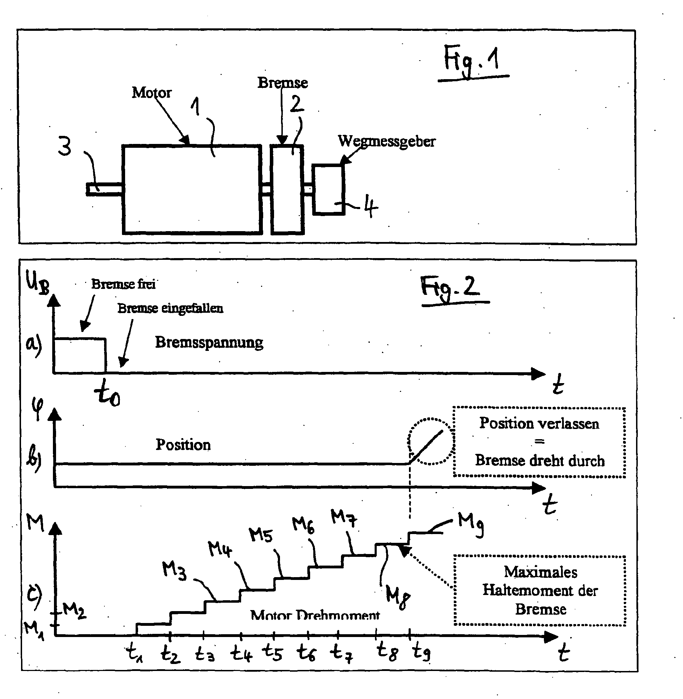

Fig. 1 zeigt einen Motor 1 für einen in der Zeichnung nicht dargestellten Roboter. Der Motor umfaßt eine Bremse 2, in die sich die Welle 3 des Motors 1 erstreckt. Durch die Bremse 2 kann die Welle 3 des Motors gebremst werden. Durch einen Wegmeßgeber 4 wird die Position der Welle 3 erfaßt.

Fig. 2a zeigt den Verlauf der Bremsspannung U_{B} über der Zeit t. Zunächst ist die Bremse frei, also geöffnet. Sie wird mit der Soll-Bremsspannung angesteuert.

Zum Zeitpunkt t₀ wird die Bremsspannung auf Null reduziert. Die Bremse ist dann eingefallen, also geschlossen.

Fig. 2c zeigt den Verlauf des Motor-Drehmoments M über der Zeit t. Zum Zeitpunkt t₁, der nach dem Zeitpunkt t₀ liegt, wird der Motor 1 mit einem definierten, vorgegebenen Drehmoment M₁ angesteuert.

Fig. 2b zeigt die Position des Motors 1, nämlich den Drehwinkel ϕ der Motorwelle 3, der vom Wegmeßgeber 4 gemessen wird. Die Position des Motors bleibt, wie aus Fig. 2b ersichtlich, während der Ansteuerung mit dem Drehmoment M₁ unverändert.

Zu einem Zeitpunkt t₂, der nach dem Zeitpunkt t₁ liegt, ergibt ein Vergleich der Motorposition zum Zeitpunkt t₂ mit der Motorposition zum Zeitpunkt t₁, daß sich die Motorposition nicht verändert hat. Das Motor-Drehmoment M₁ wurde also von der Bremse 2 abgebremst.

Dementsprechend wird im Zeitpunkt t₂ das Drehmoment erhöht, und zwar auf den Wert M₂, der größer ist als das Drehmoment M₁. Mit diesem Drehmoment M₂ wird das Verfahren erneut durchgeführt. Nach einer bestimmten Zeit werden die Positionen des Motors verglichen. Der Vergleich ergibt, wie aus Fig. 2b ersichtlich, daß auch das Motor-Drehmoment M₂ von der Bremse 2 vollständig abgebremst wird.

Dieses Verfahren wird anschließend mit weiter steigenden Motor-Drehmomenten durchgeführt. Die Zeitabstände zwischen den Zeitpunkten t₁ ... t₉ sind jeweils gleich. Auch die Differenzen zwischen aufeinanderfolgenden Motormomenten M₁ ... M₉ sind jeweils gleich.

Wie aus Fig. 2c und 2b ersichtlich, wird das Motor-Drehmoment M₈ von der Bremse 2 noch vollständig gebremst. Das zusätzlich erhöhte Motor-Drehmoment M₉ führt dann allerdings dazu, daß sich die Position des Motors 1 verändert. Durch das Drehmoment M₉ wird bewirkt, daß der Motor seine Position verläßt. Der Wegmeßgeber 4 mißt, daß sich die Welle 3 des Motors 1 dreht. Die Bremse 2 dreht durch. Das vorangegangene Drehmoment M₈ ist demnach das maximale Haltemoment der Bremse 2.

Sämtliche Drehmomente M₁ ... M₉ werden in einem Speicher (in der Zeichnung nicht dargestellt) gespeichert. Auch das maximale Drehmoment M₈ wird gespeichert.

Anschließend wird das Verfahren mit entgegengesetzter Motor-Drehrichtung erneut durchgeführt. Es ist möglich, das Verfahren anschließend für weitere Motoren des Roboters durchzuführen. Ferner kann das Verfahren anschließend für einen oder mehrere oder alle Motoren eines oder mehrerer oder aller weiteren Roboter einer Roboter-Anlage durchgeführt werden.

Das Verfahren kann ferner nach einer bestimmten Zeit erneut durchgeführt werden. Die dabei ermittelten Werte, die vorzugsweise gespeichert werden, werden mit früher gespeicherten Werten verglichen. Hierdurch kann der zeitliche Verlauf der Bremsleistung der Bremse 2 ermittelt werden. Dies kann Prognosen für die zukünftige Bremsleistung der Bremse 2 ermöglichen.

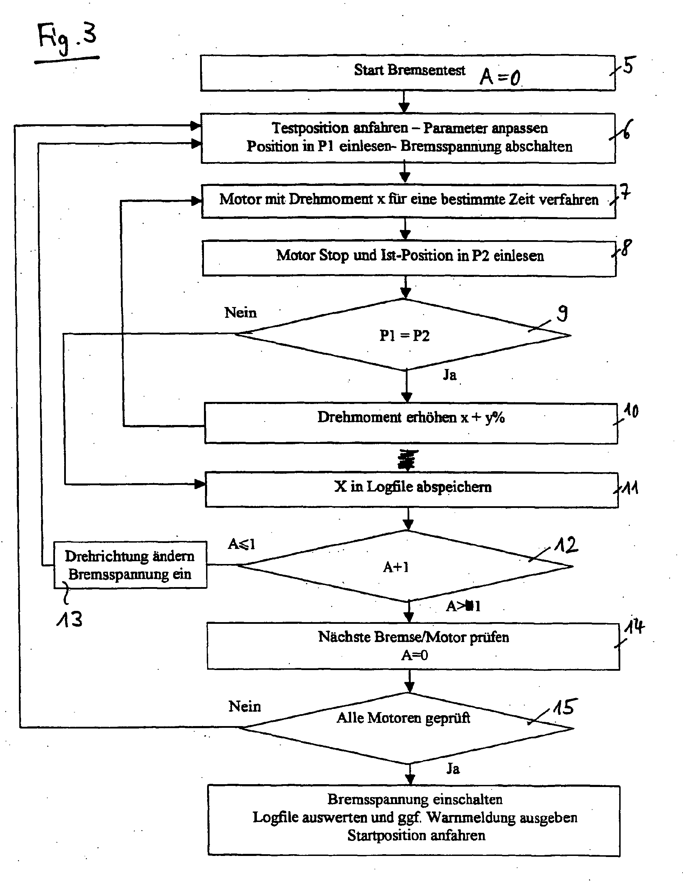

Fig. 3 zeigt das Ablaufschema des Verfahrens. Im Schritt 11 wird der Bremsentest gestartet. Der Wert A wird auf Null gesetzt.

Im Schritt 6 wird die Testposition angefahren. Die Parameter werden angepaßt. Die Position des Motors 1, also der Winkel ϕ der Welle 3, wird in den Speicherplatz P1 eingelesen. Anschließend wird die Bremsspannung U_{B} abgeschaltet, so daß die Bremse einfällt, also geschlossen wird.

Im Schritt 7 wird dann der Motor 1 mit einem vorgegebenen, definierten Drehmoment x für eine bestimmte Zeit verfahren. Der Motor 1 wird also mit diesem Drehmoment x für eine bestimmte Zeit angesteuert, und zwar für die Zeitdauer, die der Differenz aufeinanderfolgender Zeitpunkte t₁ ... t₉ entspricht, beispielsweise t₂ - t₁.

Am Ende dieser Zeitdauer wird im Schritt 8 die dann erreichte Position des Motors 1 in den Speicherplatz P2 eingelesen. Die vom Motor 1 erreichte Position ist seine Ist-Position.

Im anschließenden Schritt 9 wird die erreichte Position des Motors 1, die im Speicherplatz P2 abgespeichert ist, mit der Anfangsposition des Motors 1, die im Speicherplatz P1 gespeichert ist, verglichen. Wenn beide Positionen gleich sind, wird zum Schritt 10 verzweigt, anderenfalls zum Schritt 11.

Im Schritt 10 wird das Motor-Drehmoment x um einen bestimmten Wert erhöht, nämlich um y-Prozent (y%). Danach erfolgt ein Rücksprung zum Schritt 7.

Im Schritt 11, der im Nein-Zweig des Schrittes 9 erreicht wird, wird der aktuelle Wert des Drehmoments x als Wert X im Speicher (Logfile) abgespeichert. Bei dem Wert X handelt es sich um das Drehmoment, das um eine Stufe größer ist als das maximale Drehmoment. Aus dem Wert X kann durch Abzug der letzten Drehmoment-Erhöhung (y-Prozent) das maximale Drehmoment des Motors 1 bestimmt werden.

Im Schritt 12 wird der Wert A um 1 erhöht (A = A + 1). Falls der erhöhte Wert kleiner oder gleich 1 ist (A ≤ 1), wird zum Schritt 13 verzweigt, anderenfalls zum Schritt 14. Im Schritt 13 wird die Drehrichtung des Motors 1 geändert. Die Bremsspannung U_{B} wird eingeschaltet, so daß die Bremse 2 geöffnet wird. Anschließend wird zum Schritt 6 gesprungen.

Wenn der im Schritt 12 um 1 erhöhte Wert A größer als 1 ist (A≥1), wird im Schritt 14 die Prüfung einer weiteren Bremse eines weiteren Motors vorbereitet. Der Wert A wird auf Null gesetzt (A = 0).

Im anschließenden Schritt 15 wird festgestellt, ob alle Motoren geprüft worden sind. Wenn noch nicht alle Motoren geprüft worden sind, wird im Nein-Zweig zum Schritt 6 gesprungen. Anderenfalls wird der Prüfzyklus beendet. Die Bremsspannung U_{B} wird eingeschaltet. Der Speicher (Logfile) wird ausgewertet. Erforderlichenfalls kann eine Warnmeldung ausgegeben werden. Es ist ferner möglich, weitere erforderliche Aktionen durchzuführen. Anschließend kann die Startposition des Roboters angefahren werden.

Durch die Erfindung wird ein Verfahren geschaffen, durch das die Sicherheitsfunktion (Notstop oder Haltefunktion) der Bremse eines Roboters gewährleistet werden kann. Die Bremse kann zyklisch auf ihre Funktionstüchtigkeit überprüft werden. Bei den Bremsen handelt es sich um elektromagnetische Bremsen mit Federvorspannung, die bei Robotern vorwiegend eingesetzt werden. Die Bremse 2 und der Wegmeßgeber 4 sind auf der Welle 3 des Motors 1 montiert.

Beim Bremsentest wird in einer definierten Position des Motors 1 bzw. der Welle 3 des Motors 1 die Bremse 2 aktiviert, indem die Bremsspannung abgeschaltet wird. Der Motor wird während einer bestimmten Zeit mit einem definierten Drehmoment angesteuert. Nach Ablauf der Zeit wird der Motor gestoppt und die Position eingelesen. Reicht das Moment des Motors aus, die Haltekraft der Bremse zu überwinden, dann bewegt sich der Motor bzw. dessen Welle, dann sind also die Startposition und die Ist-Position des Motors bzw. der Welle unterschiedlich. Auf diese Weise kann das Haltemoment der Bremse bestimmt werden. Die gemessenen Daten können gespeichert werden. Damit kann der Zustand der Bremse sehr genau festgestellt werden, und es ist auch möglich, eine gewisse Vorhersage zu treffen. Im Ausführungsbeispiel wurde eine stufenweise Erhöhung des Motormoments beschrieben. Es ist allerdings auch möglich, einen bestimmten Mindesthaltewert vorzugeben, der überprüft wird.

Das Drehmoment, mit dem der Motor angesteuert wird, kann größer sein als das Nenn-Haltemoment der Bremse. Beispielsweise kann das Drehmoment, mit dem der Motor angesteuert wird, 100 %, 150 % oder 200 % oder noch mehr des Nenn-Bremsmoments der Bremse betragen.

## Patentansprüche

1. Verfahren zum Prüfen der Bremse (2) eines Motors (1) eines Roboters, wobei der Motor (1) bei eingefallener Bremse (2) mit einem definierten Drehmoment angesteuert wird und die Position (ϕ) des Motors (1) mit dessen Anfangsposition verglichen wird,
**dadurch gekennzeichnet,**
**daß** das Verfahren mit einem höheren Drehmoment erneut durchgeführt wird.

2. Verfahren nach Anspruch 1, **dadurch gekennzeichnet, daß** das oder die Drehmomente gespeichert werden.

3. Verfahren nach einem der vorhergehenden Ansprüche, **dadurch gekennzeichnet, daß** das maximale Drehmoment des Motors (1) bestimmt und/oder gespeichert wird.

4. Verfahren nach einem der vorhergehenden Ansprüche, **dadurch gekennzeichnet, daß** das Verfahren mit entgegengesetzter Motor-Drehrichtung erneut durchgeführt wird.

5. Verfahren nach einem der vorhergehenden Ansprüche, **dadurch gekennzeichnet, daß** das Verfahren für einen oder mehrere weitere Motoren des Roboters und/oder eines weiteren Roboters durchgeführt wird.

6. Verfahren nach einem der vorhergehenden Ansprüche, **dadurch gekennzeichnet, daß** das Verfahren nach einer bestimmten Zeit erneut durchgeführt wird und daß die ermittelten Werte mit früher gespeicherten Werten verglichen werden.

## Claims

1. Method for checking the brake (2) of a robot motor (1), wherein the motor (1), when the brake (2) is engaged, is activated with a defined torque and the position (ϕ) of the motor (1) is compared with its initial position, **characterized in that** the method is carried out again with a higher torque.

2. Method according to Claim 1, **characterized in that** the torque or torques are stored.

3. Method according to either of the preceding claims, **characterized in that** the maximum torque of the motor (1) is determined and/or stored.

4. Method according to one of the preceding claims, **characterized in that** the method is carried out again with an opposite direction of rotation of the motor.

5. Method according to one of the preceding claims, **characterized in that** the method is carried out for one or more further motors of the robot and/or of a further robot.

6. Method according to one of the preceding claims, **characterized in that** the method is carried out again after a certain time and **in that** the values determined are compared with values stored earlier.

## Revendications

1. Procédé de vérification du frein (2) d'un moteur (1) d'un robot, où le moteur (1), le frein étant enclenché (2), est commandé par un couple de rotation défini, et la position (ϕ) du moteur (1) est comparée avec sa position initiale, **caractérisé en ce que** le procédé est exécuté à nouveau avec un couple de rotation plus élevé.

2. Procédé selon la revendication 1, **caractérisé en ce que** le ou les couples de rotation sont stockés.

3. Procédé selon l'une des revendications précédentes, **caractérisé en ce que** le couple de rotation maximal du moteur (1) est déterminé et/ou stocké.

4. Procédé selon l'une des revendications précédentes, **caractérisé en ce que** le procédé est exécuté à nouveau avec une direction de rotation de moteur opposée.

5. Procédé selon l'une des revendications précédentes, **caractérisé en ce que** le procédé est exécuté pour un ou plusieurs autres moteurs du robot et/ou d'un autre robot.

6. Procédé selon l'une des revendications précédentes, **caractérisé en ce que** le procédé est exécuté à nouveau après un temps déterminé, et **en ce que** les valeurs déterminées sont comparées à des valeurs stockées antérieurement.
